# EUROPÄISCHE PATENTSCHRIFT

(11) **EP 1 319 151 B1**
(45) Veröffentlichungstag und Bekanntmachung des Hinweises auf die Patenterteilung: **19.01.2005**
(21) Anmeldenummer: 01978351.3
(22) Anmeldetag: 07.09.2001
(51) Int. Cl.: F23G 5/14, C01B 17/04

(54) **VERFAHREN ZUR REGENERIERUNG VON SCHWEFELHALTIGEM RESTSTOFF UND VERWENDUNG EINES ZERSTÄUBUNGSBRENNERS ZUR DURCHFÜHRUNG DES VERFAHRENS**
METHOD OF REGENERATING A RESIDUAL SUBSTANCE THAT CONTAINS SULPHUR AND THE USE OF A ATOMIZING BURNER FOR CARRYING OUT THE METHOD
PROCEDE POUR REGENERER UNE SUBSTANCE RESIDUELLE CONTENANT DU SOUFRE ET UTILISATION D'UN BRULEUR A PULVERISATION POUR METTRE EN OEUVRE CE PROCEDE

(30) Priorität: 12.09.2000 DE 10045320
(43) Veröffentlichungstag der Anmeldung: 18.06.2003
(73) Patentinhaber: Messer Griesheim GmbH, 65933 Frankfurt am Main (DE); Roehm Gmbh & Co. Kg, 64293 Darmstadt (DE)
(72) Erfinder: GROSS, Gerhard, 47877 Willich (DE); GRUENIG, Heinz, 68647 Biblis (DE)
(86) Internationale Anmeldenummer: PCT/EP2001/010346
(87) Internationale Veröffentlichungsnummer: WO 2002/023088

(56) Entgegenhaltungen:
- EP-A- 0 496 101
- EP-A- 0 509 193
- GB-A- 1 527 661
- US-A- 3 661 534
- US-A- 4 102 651
- US-A- 4 853 206
- US-A- 5 370 771
- US-A- 5 531 169

## Beschreibung

Die vorliegende Erfindung betrifft ein Verfahren zur Regenerierung von schwefelhaltigem Reststoff nach dem Oberbegriff des Anspruchs 1. Ein solches Verfahren ist aus dem Dokument GB-A-1 527 661 schon bekannt.

Weiterhin betrifft die Erfindung die Verwendung eines Zerstäubungsbrenners zur Durchführung des Verfahrens, umfassend eine zentrale Innendüse für die Zufuhr von schwefelhaltigem Reststoff, die von einer Außendüse umgeben ist

Nach dem Stand der Technik erfolgt die Aufarbeitung schwefelhaltiger Reststoffe, wie z.B. gebrauchter Schwefelsäuren (sogenannter "Abfallschwefelsäuren"), Ammoniumsulfatlösungen, durch thermische Spaltung in sogenannten Spaltanlagen. Die Reststoffe werden hierbei einer durch heiße Rauchgase erzeugten Erhitzungszone eines feuerfest ausgekleideten Reaktors, im folgenden auch als "Spaltofen" bezeichnet, zugeführt und darin unter Bildung von Schwefeldioxid thermisch gespalten. Die Erhitzungszone wird durch Verbrennung eines Brennstoffs mit einem sauerstoffhaltigen Oxidationsmittel erzeugt. Die schwefeldioxidhaltigen Prozessgase werden nach dem Stand der Technik zu Schwefelsäure, Oleum oder Schwefeldioxid weiterverarbeitet.

Es sind zwei unterschiedliche Reaktortypen gebräuchlich, die sich in erster Linie hinsichtlich der Prozessgasströmung unterscheiden; nämlich vertikal oder horizontal durchströmte Spaltöfen.

Beim vertikal durchströmten Spaltofen sind Brenner zur Erzeugung der heißen Rauchgase in einer oder mehreren Ebenen direkt radial oder tangential an die Ofenwand angeflanscht. Die Flamme entwickelt sich erst im Spaltofen, womit bei unvollständiger Verbrennung CO und Ruß gebildet werden kann und die Gefahr der Braunfärbung der produzierten Schwefelsäure besteht. Deswegen werden Spaltanlagen neuerer Bauart anstelle der direkt angeflanschten Brenner mit vorgeschalteten, Combustoren genannten, Brennkammem ausgerüstet. Combustoren erzeugen ein ca. 2000°C heißes, ausreagiertes Rauchgas.

Beim horizontal angeordneten Spaltofen werden meistens ein oder mehrere Brenner oder Combustoren direkt an die Stirnwand angeflanscht. Die Flamme oder das Rauchgas tritt horizontal aus.

Als Brennstoff kommen Brenngase und flüssige Brennstoffe, vorzugsweise mit hohem Schwefelgehalt, wie z.B. Heizöl S in Frage. Für den Fall einer notwendigen Erhöhung der Schwefelsäureproduktion wird auch flüssiger Schwefel als Brennstoff zugegeben, der direkt im Spaltofen zu Schwefeldioxid verbrennt. Als Oxidations-Medium wird üblicherweise Luft verwendet, die entweder mit Umgebungstemperatur oder rekuperativ aufgeheizt in das Brennergeschränk zugegeben wird.

Der Säureeintrag in den Spaltofen erfolgt durch Druckzerstäuber, Druckluftzerstäuber oder Rotationszerstäuber, die aus säurebeständigen Werkstoffen gefertigt sind.

Allen Spaltverfahren gemeinsam ist die notwendige sehr hohe Spalttemperatur von 900 bis 1200°C, bei der die schwefelhaltigen Reststoffe thermisch in Schwefeldioxid, Wasserdampf, Sauerstoff und gegebenenfalls Stickstoff und Kohlendioxid umgesetzt werden. Die stark endotherme Spaltreaktion läuft in den oben beschriebenen Spaltöfen ab, wobei große Mengen an Energie in Form von Brenngas oder Öl erforderlich sind. So werden z.B. für die Spaltung einer 70%igen Abfallschwefelsäure, bestehend aus 70% Schwefelsäure und 30% Wasser, theoretisch ca. 1770 KWh Energie pro Tonne Abfallsäure benötigt.

Bei Verwendung von Luft als Oxidationsmittel muss auch der inerte Stickstoffanteil auf die Spalttemperatur von ca. 1000 °C aufgeheizt werden, was zu einer zusätzlichen Erhöhung des Energieverbrauches und zur Reduzierung der Schwefeldioxidkonzentration, sowie Vergrößerung des Prozessgasvolumens führt.

Prinzipiell lassen sich die spezifischen Entsorgungskosten pro Tonne Abfallsäure durch die Steigerung der Schwefeldioxidkonzentration im Prozessgas reduzieren.

Höhere Schwefeldioxidkonzentrationen können entweder durch Aufkonzentrieren der schwefelhaltigen Reststoffe in einer separaten Anlage oder durch eine Reduzierung des inerten Stickstoffanteiles in der Verbrennungsluft erreicht werden, was üblicherweise durch Einsatz von Sauerstoff als Oxidationsmedium erzielt wird. Für die Vermischung des Sauerstoffes mit den Brennstoffen im Spaltofen haben sich bislang folgende Verfahren in der Praxis bewährt:
- Anreicherung der Verbrennungsluft mit Sauerstoff
- Injektion von Sauerstoff in die Luftflamme
- Einsatz eines Brennstoff/Sauerstoffbrenners

Durch die Sauerstoffanreicherung und/oder Sauerstoffinjektion erhöht sich die Flammentemperatur, was zu Schäden an den Brennern und/oder der feuerfesten Ausmauerung führen kann.

Sowohl bei der Sauerstoffanreicherung als auch der Sauerstoffinjektion wird die Temperatur der Flamme erhöht und damit die thermische Stickoxidbildung begünstigt, was prinzipiell für den Spaltprozess von Nachteil ist.

Bei Einsatz eines Brennstoff/Sauerstoff-Brenners werden Brennstoffe, wie Öl oder Brenngas, außenmischend mit Sauerstoff mittels eines geeigneten Brenners verbrannt. Die Sauerstoffbrenner können zusätzlich zur Leistungssteigerung eines bestehenden Spaltofens, aber auch anstelle von Luft-Brennern in den Reaktor integriert werden. Durch die sehr hohen Flammentemperaturen von bis zu 2900°C ergeben sich die gleichen Probleme wie bei den vorhergenannten Verfahren. Darüber hinaus sind wassergekühlte Sauerstoffbrenner wartungsintensiv, da an der gekühlten Oberfläche durch Kondensieren von Schwefelsäure Korrosionsschäden auftreten können.

Wegen dieser Nachteile war der Sauerstoffeinsatz zur Leistungssteigerung von Spaltanlagen zur Regenerierung schwefelhaltiger Reststoffe nur eingeschränkt möglich. So konnten zum Beispiel Spaltöfen, die mit Combustoren ausgerüstet waren, bislang nicht mit Sauerstoff betrieben werden, weil sowohl durch die Sauerstoffanreicherung als auch durch die Sauerstoffinjektion sich die Flammentemperatur erhöht, so dass die bereits an der oberen Temperaturgrenze betriebene Ausmauerung des Combustors schmilzt und darüber hinaus durch die erhöhte Stickoxidbildung die Qualität der produzierten Schwefelsäure durch erhöhte Nitrosylschwefelsäuregehalte stark vermindert wird.

Der Erfindung liegt daher die Aufgabe zugrunde, ein Verfahren zur Regenerierung schwefelhaltiger Reststoffe anzugeben, bei dem Sauerstoff ohne die obigen Nachteile und Begrenzungen als zusätzliches Oxidationsmedium zur Leistungssteigerung und zur Verbesserung der Wirtschaftlichkeit in den Spaltofen eingetragen werden kann. Weiterhin liegt der Erfindung die Aufgabe zugrunde, einen zur Durchführung des Verfahrens geeigneten Zerstäubungsbrenner mit hoher Standzeit anzugeben.

Hinsichtlich des Verfahrens wird diese Aufgabe, ausgehend von den eingangs genannten Verfahren, erfindungsgemäß durch die kennzeichnenden Merkmale des Anspruchs 1 gelöst.

Der reststoffhaltige Tropfenstrom und der brennstoffhaltiger Tropfenstrom werden einer Vor-Reaktionszone zugeführt. Diese wird erzeugt, indem Reststoff und Brennstoff fein verteilt mit dem sauerstoffreichem Gas reagieren. In der Vor-Reaktionszone wird der schwefelhaltige Reststoff teilweise gespalten und anschließend in die aus den heißen Rauchgasen bestehende Reaktionszone höherer Temperatur eingeleitet, in der die vollständige thermische Spaltung des schwefelhaltigen Reststoffs erfolgt. Die Vor-Reaktionszone ist insoweit von der eigentlichen Reaktionszone entkoppelt. Dadurch kann die für die Leistungssteigerung benötigte zusätzliche Energie in der Vor-Reaktionszone bereitgestellt werden, ohne dass es zu einer Erhöhung der Flammentemperatur in der eigentlichen Reaktionszone und damit zu einer Überschreitung der Temperaturgrenzen in diesem Bereich oder zu erhöhter Stickoxidbildung kommt.

Die Vor-Reaktionszone wird erzeugt, indem dort Bennstoff mit dem sauerstoffreichen Gasstrom verbrannt wird. Die Brennstoffe zur Ausbildung der Vor-Reaktionszone und der eigentlichen Reaktionszone können identisch sein. Der sauerstoffreiche Gasstrom ist reiner Sauerstoff oder ein Sauerstoff/Luft-Gemisch mit einer Sauerstoffkonzentration zwischen 25 Vol.-% und 100 Vol.-%.

Durch die gemeinsame Einleitung von Reststoff und Brennstoff in die Vor-Reaktionszone und die teilweise Spaltung des Reststoffs kann die thermische Spaltung des Reststoffs in der eigentlichen Reaktionszone bei niedrigen Reaktionstemperaturen erfolgen, was eine geringe Stickoxidbildung bei hohen Reaktionsgraden im Gesamtprozess zur Folge hat. Die noch nicht vollständig gespaltenen Reaktionsprodukte aus der Vor-Reaktionszone werden in die eigentliche Reaktionszone höherer Temperatur übergeleitet, in der die vollständige Spaltung und Verbrennung der Reaktionsprodukte erfolgt, ohne dass zusätzlich Stickoxide gebildet werden.

Vorzugsweise wird in der Vor-Reaktionszone eine Maximaltemperatur im Bereich zwischen 800 °C und 1300 °C, besonders bevorzugt zwischen 850 °C bis 1100 °C, eingestellt. Dadurch wird eine geringe thermische Belastung der Ausmauerung und eine geringe thermische Stickoxidbildung gewährleistet. Die Temperatur in der Vor-Reaktionszone lässt sich durch separates Einstellen der Mengenströme von schwefelhaltigem Reststoff, Brennstoff und sauerstoffreichem Gas regulieren. Diese werden unabhängig voneinander so eingestellt, dass die Temperatur in der Vor-Reaktionszone innerhalb der genannten, bevorzugten Temperaturbereiche liegt.

Vorzugsweise wird in der ersten Reaktionszone eine reduzierende Atmosphäre aufrechterhalten, indem der Sauerstoffgehalt in der Vor-Reaktionszone unterstöchiometrisch in Bezug auf oxidierbare Komponenten des Reststoffs und des Brennstoffs eingestellt wird.

Besonders bewährt hat sich eine Verfahrensweise, bei der Reststoff und Brennstoff unter Einsatz eines Zerstäubungsmediums in den Reaktor eingebracht werden, wobei das Zerstäubungsmedium mindestens teilweise durch den sauerstoffreichen Gasstrom gebildet wird. Ansonsten können beispielsweise auch Druckluft oder Dampf als Zerstäubungsmedium eingesetzt werden. Unter einem Zerstäubungsmedium werden hierbei die dem Zerstäuber zugeführten Medien verstanden, die unmittelbar oder mittelbar bei der Zerstäubung von Reststoff und Brennstoff mitwirken. Insbesondere werden darunter auch solche Medien verstanden, die dem Zerstäuber zugeführt werden, mit dem Ziel, den bei der Zerstäubung sich bildenden Zerstäubungskegel zu umhüllen. Als Zerstäuber werden Druckzerstäuber, Rotationszerstäuber oder Injektorzerstäuber eingesetzt.

Zweckmäßigerweise wird ein Reststoff/Brennstoff-Gemisch in Form eines Reststoff/Brennstoff-Tropfenstroms in den Reaktor eingebracht. Hierbei wird außerhalb des Reaktors ein Reststoff/Brennstoff-Gemisch erzeugt. Dieses wird zur Bildung des Reststoff/Brennstoff-Tropfenstroms einem Zerstäuber zugeführt und mittels diesem in die Vor-Reaktionszone eingetragen. Der sauerstoffreiche Gasstrom wird der Vor- Reaktionszone zusammen mit diesem Gemisch oder getrennt davon zugeführt.

Es wurde gefunden, dass es besonders günstig ist, wenn der sauerstoffreiche Gasstrom den Reststoff/Brennstoff-Tropfenstrom als Hüll-Gasstrom umhüllt und unter Ausbildung der ersten Reaktionszone durchdringt. Der Hüll-Gasstrom in diesem Sinne wird ganz oder teilweise durch den sauerstoffreiche Gasstrom oder einen Teil davon gebildet. Dabei wird der Hüll-Gasstrom zweckmäßigerweise auch ganz oder teilweise als Sekundärzerstäubermedium für das Reststoff/Brennstoff-Gemisch genutzt.

Besonders bewährt hat sich eine Ausgestaltung des erfindungsgemäßen Verfahrens, bei welcher der Hüll-Gasstrom teilweise von einem Luftstrom gebildet wird, wobei der Sauerstoffgehalt im Hüll-Gasstrom zwischen 25 Vol.-% und 100 Vol.-% eingestellt wird. Der Sauerstoffgehalt im Hüll-Gasstrom wird dabei durch das Verhältnis der Strömungsvolumina von Luftstrom und dem sauerstoffreiche Gasstrom und dessen Sauerstoffgehalt eingestellt.

Darüber hinaus wird zur Zerstäubung des Reststoffs ein Zerstäubungsbrenner eingesetzt, der eine zentrale Innendüse für die Zufuhr des Reststoff-/Brennstoff-Gemischs aufweist, die koaxial von einer Schutzgasdüse und von einer Ringspaltdüse für die Zufuhr des sauerstoffreichen Hüll-Gasstroms umgeben ist, wobei durch die Schutzgasdüse Schutzgas geleitet wird. Das durch die Schutzgasdüse eingeleitete Schutzgas dient zur Abschirmung der zentralen Innendüse vor dem sauerstoffreichen Hüll-Gasstrom. Dadurch kann die Innendüse aus einem Werkstoff bestehen, der bei Kontakt mit dem sauerstoffreicheren Hüll-Gasstrom bei den vorherrschenden hohen Temperaturen rasch oxidiert würde.

In einer besonders bevorzugen Ausgestaltung des erfindungsgemäßen Verfahrens umfasst der sauerstoffreiche Gasstrom einen vorgewärmten Heißluftstrom und einen davon getrennt geführten sauerstoffreichen Gasstrom. Der Sauerstoffgehalt des sauerstoffreichen Gasstrom beträgt vorzugsweise mindestens 80 Vol.-%.

Hinsichtlich des Zerstäubungsbrenners wird die oben angegebene Aufgabe ausgehend von dem eingangs beschriebenen Zerstäubungsbrenner erfindungsgemäß dadurch gelöst, dass zwischen der Innendüse und der Außendüse eine die Innendüse koaxial umgebende Schutzgasdüse vorgesehen ist, und dass die Innendüse mit einem Einlass für ein Reststoff/Brennstoff-Gemisch, und die Außendüse mit einem Einlass für einen sauerstoffreichhaltigen Gasstrom verbunden ist.

Beim erfindungsgemäßen Verfahren und Verwendung ist zwischen der Innendüse und der Außendüse eine Schutzgasdüse vorgesehen. Die Schutzgasdüse umgibt die Innendüse koaxial. Dadurch ist es möglich, durch die Schutzgasdüse ein Schutzgas einzuleiten, dem gegenüber die Innendüse inert ist und das die Innendüse von der Umgebung nach außen abschirmt. Dies ermöglicht es wiederum, die Innendüse aus einem Werkstoff auszubilden, der zwar resistent gegenüber dem schwefelhaltigen Reststoff, jedoch nicht stabil gegenüber dem aus der Außendüse austretenden Medium ist.

Wie bereits oben anhand des erfindungsgemäßen Verfahrens erläutert, weist der sauerstoffreiche Gasstrom im Sinne der vorliegenden Erfindung einen Sauerstoffgehalt zwischen 25 Vol.-% und 100 Vol.-% auf. Die Wirkung der Einleitung dieses Gasstroms hinsichtlich der Leistungssteigerung bei der Regenerierung schwefelhaltiger Reststoffe in einem Reaktor in Verbindung mit einer Einleitung eines Reststoff/Brennstoff-Gemischs unter Bildung einer Vor-Reaktionszone in dem Reaktor ist weiter oben eingehend erläutert.

Das erfindungsgemäße Verfahren ermöglicht die Zerstäubung des Reststoffs unter Einleitung des sauerstoffreichen Gasstroms oder eines Teils davon durch die Außendüse, wobei die Innendüse durch Einleitung eines geeigneten Schutzgases durch die Schutzgasdüse vor dem sauerstoffreichen Gasstrom abgeschirmt werden kann. Es ist somit möglich, die Innendüse aus einem ansonsten bei den Umgebungsbedingungen korrosionsgefährdeten Werkstoff auszubilden.

Vorzugsweise besteht die Innendüse aus Zirkonium. Zirkonium zeichnet sich durch hohe Säurebeständigkeit und Verschleißfestigkeit aus, wird jedoch bei hohen Temperaturen (zum Beispiel bei 1000 °C) aufgrund seiner Affinität in reinem Sauerstoff rasch oxidiert, bzw. unter Umständen sogar gezündet, was durch das durch die Schutzgasdüse eingeleitete Medium vermieden wird.

Eine weitere Verbesserung des Verfahrens ergibt sich dadurch, dass in der Außendüse Drallvorrichtungen vorgesehen sind. Die Drallvorrichtungen bewirken beim erfindungsgemäßen Verfahren eine zusätzliche Sekundärzerstäubung des Reststoff/Brennstoff-Gemisches.

Besonders einfach gestaltet sich eine Ausführungsform des Zerstäubungsbrenners, bei der die Außendüse als Ringspalt ausgebildet ist, der die Schutzgasdüse koaxial umgibt.

In einer alternativen und gleichermaßen bevorzugten Ausführungsform ist die Außendüse als Ringspalt ausgebildet, in dem eine Vielzahl um den Außenumfang der Schutzgasdüse verteilte Einzeldüsen angeordnet sind. Bei dieser Ausführungsform ist es möglich, durch den Ringspalt ein erstes Gas einzuleiten und durch die Einzeldüsen ein zweites Gas. Beispielsweise kann das erste Gas vorgewärmte Luft sein und das zweite Gas ein sauerstoffreicher Gasstrom im Sinn dieser Erfindung, mit einem Sauerstoffgehalt von vorzugsweise mindestens 80 Vol.-%.

Im folgenden wird die Erfindung anhand von Ausführungsbeispielen und einer Zeichnung näher erläutert. In der Zeichnung zeigen im einzelnen
- **Figur 1**: den Zerstäubungsbrenner in einer ersten Ausführungsform,
- **Figur 2**: den Zerstäubungsbrenner gemäß Figur 1 in einer Draufsicht auf die Öffnung der Zerstäubungsdüse,
- **Figur 3**: eine zweite Ausführungsform des Zerstäubungsbrenners mit einer Außendüse mit Dralleinrichtung,
- **Figur 4**: den Zerstäubungsbrenner gemäß Figur 3 in einer Draufsicht auf die Öffnung der Zerstäubungsdüse,
- **Figur 5**: eine dritte Ausführungsform des Zerstäubungsbrenners mit einer Außendüse mit darin angeordneten Einzeldüsen, und
- **Figur 6**: den Zerstäubungsbrenner gemäß Figur 5 in einer Draufsicht auf die Öffnung der Zerstäubungsdüse.

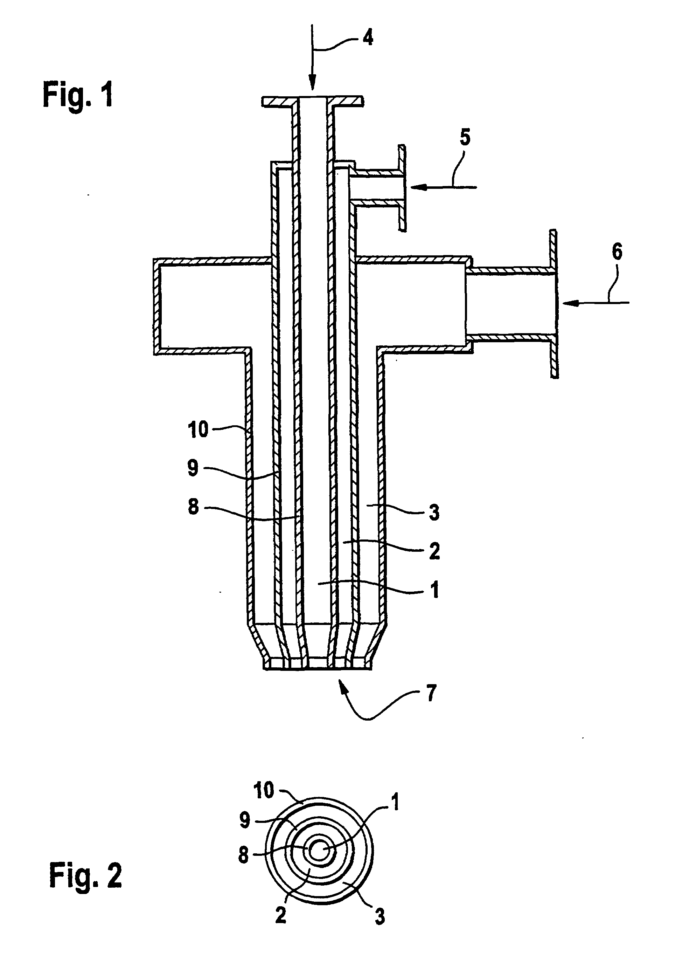

Der in **Figur 1** dargestellte Zerstäubungsbrenner weist eine zentrale Innendüse 1 auf, die koaxial von einer ringspaltförmigen Trenngasdüse 2 und von einer weiteren ringspaltförmigen Außendüse 3 umgeben ist. Die Innendüse 1 weist einen Einlass 4 für ein Gemisch aus schwefelhaltigem Reststoff und Brennstoff, wie z.B. leichtes oder schweres Heizöl , Abfallöl oder Lösemittel, die Trenngasdüse 2 ist mit einem Lufteinlass 5 versehen, und die Außendüse 3 mit einem Einlass 6 für ein Sauerstoff/Luft-Gemisch, dessen Sauerstoffgehalt zwischen 20,6 Vol.-% und 100 Vol.-% regelbar ist.

Die Innendüse wird durch ein Rohr 8 aus Zirkon gebildet, das sich konisch in Richtung der Düsenöffnung 7 verjüngt. Die übrigen Wandungen der Düsen (2; 3) bestehen aus warmfesten, schwefelresistenten, hochlegiertem Edelstahl in Form zweier koaxialer Rohre (9; 10).

Sofern in den Darstellungen der Figuren 2 bis 6 die gleichen Bezugsziffem verwendet sind wie in Figur 1, so sind damit identische oder äquivalente Bauteile oder Bestandteile des erfindungsgemäßen Zerstäubungsbrenners bezeichnet, wie sie oben anhand Figur 1 bereits erläutert sind.

Aus der Draufsicht auf die Zerstäubungsdüse gemäß **Figur 2** ist die koaxiale Anordnung der einzelnen Rohre (8; 9; 10) und der Düsen (1, 2, 3) des Zerstäubungsbrenners gemäß Figur 1 ersichtlich.

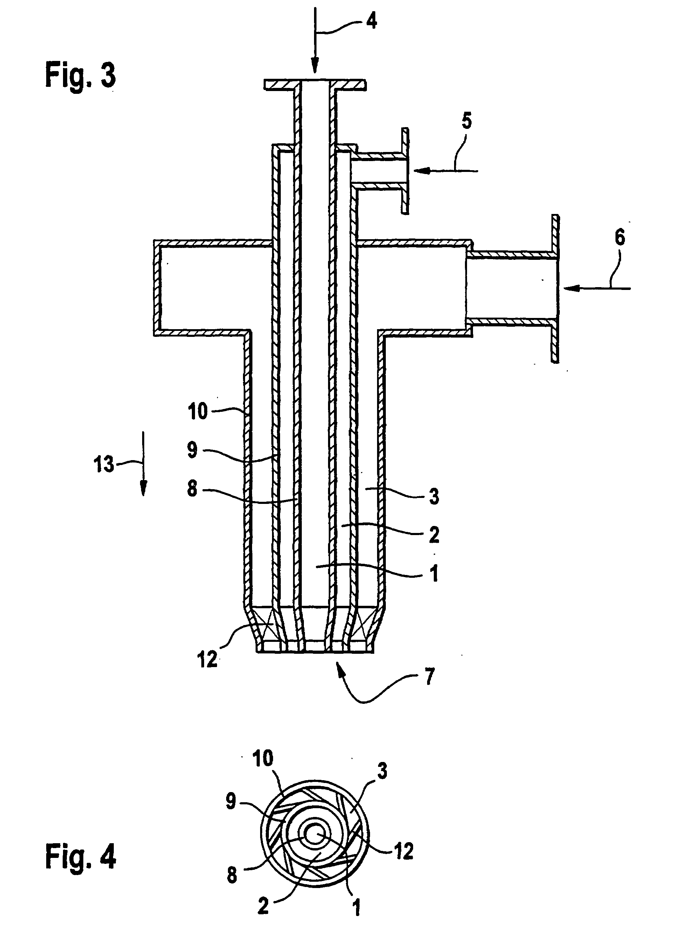

Bei der in **Figur 3** dargestellten Ausführungsform des erfindungsgemäßen Zerstäubungsbrenners ist im unteren Bereich der Außendüse 3, kurz vor der Düsenöffnung 7 eine Drallvorrichtung in Form von Lamellen 12 vorgesehen, die in Strömungsrichtung 13 schräg innerhalb der Außendüse 3 aufgestellt sind.

Aus der Draufsicht auf die Zerstäubungsdüse gemäß **Figur 4** ist die koaxiale Anordnung der einzelnen Rohre (8; 9; 10) und der Düsen (1, 2, 3) sowie die Lammellen 12 innerhalb der Außendüse 3 des Zerstäubungsbrenners gemäß Figur 3 zu erkennen.

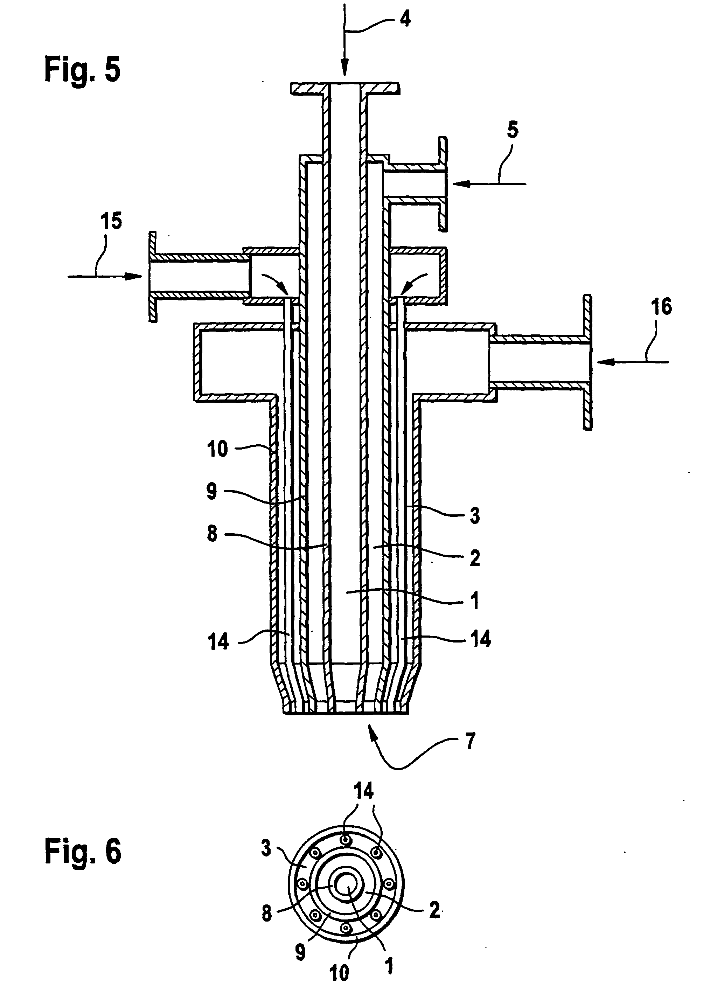

**Figur 5** zeigt eine Ausführungsform des erfindungsgemäßen Zerstäubungsbrenners, bei dem innerhalb der ringspaltförmigen Außendüse 3 eine Vielzahl von Einzeldüsen 14 (im Ausführungsbeispiel sind es acht Einzeldüsen 14) mit kreisförmigem Querschnitt verlaufen. Die Einzeldüsen 14 sind um die Trenngasdüse 2 gleichmäßig verteilt. Sie werden durch Rohre aus austenitischem Werkstoff gebildet, die mit ihrem oberen, der Düsenöffnung 7 abgewandten Ende mit einem Sauerstoffeinlass 15 verbunden sind. Die Außendüse 3 ist bei diesem Zerstäubungsbrenner mit einem Einlass 16 für Heißluft verbunden.

Durch diese Anordnung der Einzeldüsen ist der Sauerstoff bis zur Düsenöffnung 7 von der vorgewärmten Luft getrennt. Damit können beliebig hohe Sauerstoffmengen oder Luftmengen sicherheitstechnisch unbedenklich in den Ofen zugegeben werden.

Aus der Draufsicht auf die Öffnung der Zerstäubungsdüse gemäß **Figur 6** ist die koaxiale Anordnung der einzelnen Rohre (8; 9; 10) und der Düsen (1, 2, 3) sowie die Anordnung der kreisförmigen Einzeldüsen 14 um die Trenngasdüse 2 bei dem Zerstäubungsbrenner gemäß Figur 5 zu erkennen.

Die Vorteile des erfindungsgemäßen Verfahrens sollen anhand der Beispiele näher erläutert werden, ohne dass damit der Umfang der Erfindung eingeschränkt wird.

### Vergleichsbeispiel 1

Zur Spaltung von schwefelhaltigen Reststoffen wird eine bestehende Spaltanlage mit vertikal durchströmten Spaltofen eingesetzt, bei den die Reststoffe am Ofenkopf eingesprüht werden und das Prozessgas den Spaltofen von oben nach unten durchströmt. Der Spaltofen wird mit zwei tangential angeordneten Combustoren mit Heizöl S als Brennstoff und vorgewärmter Luft als Oxidationsmedium befeuert.

Der von oben durch die Zerstäuberdüse eingesprühte Reststoff wird in den heißen von den Combustoren erzeugten Rauchgasen thermisch gespalten.

Als Reststoff wurden 12 m³/h einer Abfallsäure aus der Methylmethacrylatproduktion mit folgender Zusammensetzung
- 41,3 Gew.-% Schwefelsäure
- 27,5 Gew.-% Ammoniumsulfat
- 27,5 Gew.-% Wasser
- 3,7 Gew.-% organische Stoffe
eingesetzt.

Die Zerstäubung erfolgt mit einer herkömmlichen Zerstäuberdüse. Die zugeführte Reststoffmenge von 12 m³/h entspricht in diesem Fall der Maximalkapazität der Anlage. Die erzielten Ergebnisse sind im folgenden tabellarisch dargestellt.

### Tabelle 1: Ergebnisse (Vergleichsbeispiel 1)

- Durchsatz an schwefelhaltigem Reststoff: 12 m³/h
- Brennstoffdurchsatz: 1.700 kg/h
- Luftdurchsatz: 27.000 m³/h (i.N.)
- Sauerstoffdurchsatz: 0 m³/h(i.N.)
- Temperatur Ofenkopf: 890 °C
- Temperatur Ofenausgang: 1000 °C
- SO₂-Konzentration im Reaktionsgas: 8,3 Vol.-%, trocken
- NOₓ-Konzentration im Reaktionsgas: 140 mg/m³ (i.N.),trocken
- SO₃-Konzentration im Reaktionsgas : 8,8 mg/m³ (i.N.),trocken

### Beispiel 1

Für die Versuche wurde der gleiche Spaltofen wie in Vergleichsbeispiel 1 mit dem in Fig1 und Fig.2 beschriebenen erfindungsgemäßen Brenner ausgerüstet.

Es wurde der gleiche schwefelhaltige Reststoff bei identischer Reststoffzufuhr wie in Vergleichsbeispiel 1 eingesetzt. Reiner Sauerstoff wurde über die konzentrische Zerstäuberdüse 3 in den Reaktionsraum eingeblasen.

Bei einem Sauerstoffdurchsatz von 1.000 m³/h wurde die Brennstoff- und Luftmenge in den Combustoren reduziert und gleichzeitig 420 kg/h Heizöl S dem schwefelhaltigen Reststoff zugemischt und mittels des erfindungsgemäßen Sauerstoffzerstäubungsbrenners in die Vor-Reaktionszone fein zerteilt eingesprüht. Der Tropfenkegel des Reststoff/Brennstoff-Gemisches wurde von dem mittels der konzentrischen Düse 3 erzeugten Sauerstoffstrom umhüllt und unter Bildung der Vor-Reaktionszone durchdrungen. Die vollständige thermische Spaltung findet in der Reaktionszone in dem heißen Rauchgasstrom statt, der in den Combustoren erzeugt wurde. Der Vergleich der SO₃-Werte zum Vergleichsbeispiel 1 zeigt, dass die thermische Spaltung der Reststoffe vollständig erfolgte.

Aufgrund des reduzierten Prozessgasvolumenstroms erhöht sich die SO₂-Konzentration im Reaktionsgas von 8,3 Vol.-% auf 10,4 Vol.-%. Die Temperaturen am Ofenkopf und am Ofenausgang waren nahezu identisch. Die gemessenen Stickoxidwerte im Reaktionsgas am Ofenausgang zeigen keine Erhöhung gegenüber Vergleichsbeispiel 1. Die erzielten Ergebnisse sind im folgenden tabellarisch dargestellt.

### Tabelle 2: Ergebnisse (Beispiel 1)

- Durchsatz an schwefelhaltigem Reststoff: 12 m³/h
- Brennstoffdurchsatz: 1.620 kg/h
- Luftdurchsatz: 21.000 m³/h (i.N.)
- Sauerstoffdurchsatz: 1.000m³/h(i.N.)
- Temperatur Ofenkopf: 868 °C
- Temperatur Ofenausgang: 1002 °C
- SO₂-Konzentration im Reaktionsgas: 10,4 Vol.-%, trocken
- NOₓ-Konzentration im Reaktionsgas: 165 mg/m³ (i.N.),trocken
- SO₃-Konzentration im Reaktionsgas: 8,8 mg/m³ (i.N.),trocken

### Beispiel 2

Im Beispiel 3 wurde bei gleicher Zusammensetzung des Reststoffes wie im Beispiel 1 der Durchsatz an schwefelhaltigen Reststoff um 33,3 % von 12 m³/h auf 16 m³/h erhöht. Die Sauerstoffmenge betrug 2000 m³/h. Die zur zusätzlichen Spaltung benötigte Energie wurde über den erfindungsgemäßen Zerstäubungsbrenner, der in Fig. 1 und Fig. 2 dargestellt ist, durch Zumischen von 510 kg/h Heizöl S zum schwefelhaltigen Reststoff zugeführt und in die Vor-Reaktionszone eingetragen. Trotz erhöhter Durchsatzleistung war der Spaltgrad geringfügig höher, wie an den SO₃-Werten zu erkennen. Ein Temperaturanstieg am Ofenkopf wurde nicht beobachtet. Die Temperatur am Spaltofenausgang war konstant. Im Vergleich zum Vergleichsbeispiel 1 stieg bei nahezu konstantem Prozessgasvolumenstrom die SO₂-Konzentration von 8,3 Vol.-% auf 11,4 Vol.-% an. Die Stickoxidkonzentration war relativ zum SO₂-Gehalt etwas geringer. Die erzielten Ergebnisse sind im folgenden tabellarisch dargestellt.

### Tabelle 3: Ergebnisse (Beispiel 2)

- Durchsatz an schwefelhaltigem Reststoff: 16 m³/h
- Brennstoffdurchsatz: 2.020 kg/h
- Luftdurchsatz: 2.3500 m³/h (i.N.)
- Sauerstoffdurchsatz: 2.000 m³/h(i.N.)
- Temperatur Ofenkopf: 872°C
- Temperatur Ofenausgang: 1000° C
- SO₂-Konzentration im Reaktionsgas: 11,4 Vol.-%, trocken
- NOₓ-Konzentration im Reaktionsgas: 180 mg/m³ (i.N.),trocken
- SO₃-Konzentration im Reaktionsgas: 9,5 mg/m³ (i.N.),trocken

Nach mehrwöchiger Produktion zeigten sich keine Schäden an der Ausmauerung und den Combustoren , sowie dem Zerstäubungsbrenner. Das Verfahren ist sowohl zur Leistungssteigerung bestehender Spaltanlagen als auch zur Reduzierung der Anlagengröße beim Bau von Neuanlagen geeignet.

## Patentansprüche

1. Verfahren zur Regenerierung von schwefelhaltigem Reststoff, indem ein den Reststoff enthaltender Tropfenstrom in einen Reaktor eingeleitet und einer Reaktionszone aus heißen Rauchgasen, die durch Verbrennung eines Brennstoffs erzeugt werden, zugeführt und darin erhitzt wird, so dass schwefelhaltige Verbindungen des Reststoffs thermisch gespalten werden, wobei gleichzeitig mit dem reststoffhaltigen Tropfenstrom ein brennstoffhaltiger Tropfenstrom in den Reaktor eingeleitet und einer Vor-Reaktionszone, die durch Einleitung eines sauerstoffreichen Gasstroms erzeugt wird, zugeführt wird, dabei der Reststoff in der Vor-Reaktionszone teilweise thermisch gespalten und anschließend der Reaktionszone zugeführt wird, **dadurch gekennzeichnet dass** zur Zerstäubung von Reststoff ein Zerstäubungsbrenner eingesetzt wird, der eine zentrale Innendüse für die Zufuhr des Reststoff-/Brennstoff-Gemischs aufweist, die koaxial von einer Schutzgasdüse und von einer Ringspaltdüse für die Zufuhr des sauerstoffreichen Hüll-Gasstroms umgeben ist, wobei durch die Schutzgasdüse Schutzgas geleitet wird.

2. Verfahren nach Anspruch 1, **dadurch gekennzeichnet, dass** in der Vor-Reaktionszone eine Maximaltemperatur im Bereich zwischen 800 °C und 1300 °C, vorzugsweise zwischen 850 °C bis 1100 °C, eingestellt wird.

3. Verfahren nach Anspruch 1 oder 2, **dadurch gekennzeichnet, dass** der Sauerstoffgehalt in der Vor-Reaktionszone unterstöchiometrisch in Bezug auf oxidierbare Komponenten des Reststoffs und des Brennstoffs eingestellt wird.

4. Verfahren nach einem der Ansprüche 1 bis 3, **dadurch gekennzeichnet, dass** Reststoff und Brennstoff unter Einsatz eines Zerstäubungsmediums in den Reaktor eingebracht werden, wobei das Zerstäubungsmedium mindestens teilweise durch den sauerstoffreichen Gasstrom gebildet wird.

5. Verfahren nach Anspruch 4, **dadurch gekennzeichnet, dass** ein Reststoff/Brennstoff-Gemisch in Form eines Reststoff/Brennstoff-Tropfenstroms in den Reaktor eingebracht wird.

6. Verfahren nach Anspruch 5, **dadurch gekennzeichnet, dass** der sauerstoffreiche Gasstrom den Reststoff/Brennstoff-Tropfenstrom als Hüll-Gasstrom umhüllt und unter Ausbildung der ersten Reaktionszone durchdringt.

7. Verfahren nach Anspruch 6, **dadurch gekennzeichnet, dass** der Hüll-Gasstrom ganz oder teilweise als Sekundärzerstäubermedium für den Reststoff/Brennstoff-Tropfenstrom genutzt wird.

8. Verfahren nach einem der Ansprüche 6 oder 7, **dadurch gekennzeichnet, dass** im Hüll-Gasstrom ein Sauerstoffgehalt zwischen 25 Vol.-% und 100 Vol.-% eingestellt wird.

9. Verfahren nach einem der Ansprüche 1 bis 8, **dadurch gekennzeichnet, dass** der sauerstoffreiche Gasstrom einen vorgewärmten Heißluftstrom und einen davon getrennt geführten sauerstoffreichen Gasstrom, umfasst.

10. Verwendung eines Zerstäubungsbrenners mit einer zentralen Innendüse, die von einer Außendüse umgeben ist, und einer zwischen der Innendüse (1) und der Außendüse (3) vorgesehenen, die Innendüse (1) koaxial umgebende Schutzgasdüse (2) zur Durchführung eines Verfahrens zur Regenerierung von schwefelhaltigem Reststoff, wobei der Innendüse (1) ein Reststoff/Brennstoff-Gemisch, der die Innendüse (1) koaxial umgebende Düse (2) Schutzgas und der Außendüse (3) ein sauerstoffreicher Gasstrom zugeführt wird.

11. Verwendung nach Anspruch 10, **dadurch gekennzeichnet, dass** die Innendüse (1) aus Zirkonium besteht.

12. Verwendung nach Anspruch 10 oder 11, **dadurch gekennzeichnet, dass** in der Außendüse (3) Drallvorrichtungen (12) vorgesehen sind.

13. Verwendung nach einem der Ansprüche 10 bis 12, **dadurch gekennzeichnet, dass** die Außendüse (3) als Ringspalt ausgebildet ist, der die Düse (2) koaxial umgibt.

14. Verwendung nach einem der Ansprüche 10 bis 13, **dadurch gekennzeichnet, dass** die Außendüse (3) als Ringspalt ausgebildet ist, in dem eine Vielzahl, um den Außenumfang der Schutzgasdüse (2) verteilte Einzeldüsen (14) angeordnet sind.

## Claims

1. Process for the regeneration of sulphur-containing residue by passing a residue-containing drop stream into a reactor and feeding said drop stream to a reaction zone comprising hot fumes which are produced by combustion of a fuel and heating said drop stream therein so that sulphur-containing compounds of the residue are thermally cleaved, a fuel-containing drop stream being passed into the reactor simultaneously with the residue-containing drop stream and being fed to an upstream reaction zone which is produced by passing in an oxygen-rich gas stream, the residue being subjected to partial thermal cleavage in the upstream reaction zone and then being fed to the reaction zone, **characterized in that** atomization of residue is effected using an atomizing burner which has a central inner nozzle for feeding in the residue/fuel mixture, which nozzle is surrounded coaxially by an inert gas nozzle and by an annular-gap nozzle for feeding in the oxygen-rich envelope gas stream, inert gas being passed through the inert gas nozzle.

2. Process according to Claim 1, **characterized in that** a maximum temperature in the range between 800°C and 1300°C, preferably between 850°C and 1100°C, is established in the upstream reaction zone.

3. Process according to Claim 1 or 2, **characterized in that** the oxygen content in the upstream reaction zone is established so as to be substoichiometric, based on oxidizable components of the residue and of the fuel.

4. Process according to any of Claims 1 to 3, **characterized in that** residue and fuel are introduced into the reactor with the use of an atomizing medium, the atomizing medium being formed at least partly by the oxygen-rich gas stream.

5. Process according to Claim 4, **characterized in that** a residue/fuel mixture in the form of a residue/fuel drop stream is introduced into the reactor.

6. Process according to Claim 5, **characterized in that** the oxygen-rich gas stream surrounds the residue/fuel drop stream as an envelope gas stream and penetrates it with formation of the first reaction zone.

7. Process according to Claim 6, **characterized in that** the envelope gas stream is used entirely or partly as a secondary atomizing medium for the residue/fuel drop stream.

8. Process according to either of Claims 6 and 7, **characterized in that** an oxygen content between 25% by volume and 100% by volume is established in the envelope gas stream.

9. Process according to any of Claims 1 to 8, **characterized in that** the oxygen-rich gas stream comprises a preheated hot air stream and an oxygen-rich gas stream fed separately therefrom.

10. Use of an atomizing burner comprising a central inner nozzle which is surrounded by an outer nozzle, and an inert gas nozzle (2) provided between the inner nozzle (1) and the outer nozzle (3), coaxially surrounding the inner nozzle (1) and intended for carrying out a process for the regeneration of sulphur-containing residue, a residue/fuel mixture being fed to the inner nozzle (1), inert gas being fed to the nozzle (2) coaxially surrounding the inner nozzle (1) and an oxygen-rich gas stream being fed to the outer nozzle (3).

11. Use according to Claim 10, **characterized in that** the inner nozzle (1) consists of zirconium.

12. Use according to Claim 10 or 11, **characterized in that** angular momentum apparatuses (12) are provided in the outer nozzle (3).

13. Use according to any of Claims 10 to 12, **characterized in that** the outer nozzle (3) is in the form of an annular gap which coaxially surrounds the nozzle (2).

14. Use according to any of Claims 10 to 13, **characterized in that** the outer nozzle (3) is in the form of an annular gap in which a multiplicity of individual nozzles (14) distributed around the outer circumference of the inert gas nozzle (2) are arranged.

## Revendications

1. Procédé de régénération d'une substance résiduelle contenant du soufre, dans lequel un flux de gouttes contenant la substance résiduelle est introduite dans un réacteur et est amené à une zone réactionnelle constituée de fumées chaudes qui sont générées par la combustion d'un combustible, et y est chauffé de sorte que des composés contenant du soufre de la substance résiduelle sont dissociés thermiquement, un flux de gouttes contenant du combustible étant introduit simultanément avec le flux de gouttes contenant la substance résiduelle dans le réacteur et étant amené à une zone pré-réactionnelle qui est générée par l'introduction d'un flux de gaz riche en oxygène, la substance résiduelle étant en l'occurrence dissociée partiellement dans la zone pré-réactionnelle et étant ensuite amenée à la zone réactionnelle, **caractérisé en ce qu'**un brûleur à pulvérisation est utilisé pour la pulvérisation de substance résiduelle, brûleur qui présente une buse intérieure centrale pour l'alimentation en mélange de substance résiduelle et de combustible, qui est entourée coaxialement d'une buse de gaz protecteur et d'une buse à fente annulaire pour l'alimentation en flux gazeux enveloppant riche en oxygène, un gaz protecteur étant conduit à travers la buse de gaz protecteur.

2. Procédé selon la revendication 1, **caractérisé en ce que** dans la zone pré-réactionnelle une température maximale est réglée dans la plage entre 800°C et 1300 °C, de préférence entre 850°C et 1100 °C.

3. Procédé selon la revendication 1 ou 2, **caractérisé en ce que** la teneur en oxygène dans la zone pré-réactionnelle est réglée de façon sous-stoechiométrique en ce qui concerne les composants oxydables de la substance résiduelle et du combustible.

4. Procédé selon l'une quelconque des revendications 1 à 3, **caractérisé en ce que** la substance résiduelle et le combustible sont introduits dans le réacteur en utilisant un milieu de pulvérisation, le milieu de pulvérisation étant formé au moins partiellement du flux gazeux riche en oxygène.

5. Procédé selon la revendication 4, **caractérisé en ce que** le mélange de substance et de combustible est introduit dans le réacteur sous forme d'un flux de gouttes de substance résiduelle et de combustible.

6. Procédé selon la revendication 5, **caractérisé en ce que** le flux gazeux riche en oxygène enveloppe le flux de gouttes de substance résiduelle et de combustible comme flux gazeux enveloppant et pénètre en formant la première zone réactionnelle.

7. Procédé selon la revendication 6, **caractérisé en ce que** le flux gazeux enveloppant est utilisé totalement ou partiellement pour le flux de gouttes de substance résiduelle et de combustible en tant que milieu de pulvérisation secondaire.

8. Procédé selon l'une quelconque des revendications 6 ou 7, **caractérisé en ce qu'**une teneur en oxygène comprise entre 25 % en volume et 100 % en volume est réglée dans le flux gazeux enveloppant.

9. Procédé selon l'une quelconque des revendications 1 à 8, **caractérisé en ce que** le flux gazeux riche en oxygène comporte un flux d'air chaud préchauffé et un flux gazeux riche en oxygène conduit séparément de celui-ci.

10. Utilisation d'un brûleur à pulvérisation présentant une buse intérieure centrale qui est entourée d'une buse extérieure, et une buse de gaz protecteur entourant la buse intérieure (1) coaxialement, prévue entre la buse intérieure (1) et la buse extérieure (3), pour mettre en oeuvre un procédé de régénération d'une substance contenant du soufre, dans laquelle un mélange de combustible et de substance résiduelle est amené à la buse intérieure (1), un gaz protecteur est amené à la buse (2) entourant coaxialement la buse intérieure (1) et un flux gazeux riche en oxygène est amené à la buse extérieure (3).

11. Utilisation selon la revendication 10, **caractérisée en ce que** la buse intérieure (1) est en zirconium.

12. Utilisation selon la revendication 10 ou 11, **caractérisée en ce que** des dispositifs de rotation (12) sont prévus dans la buse extérieure (3).

13. Utilisation selon l'une quelconque des revendications 10 à 12, **caractérisée en ce que** la buse extérieure (3) est conçue en tant que fente annulaire qui entoure la buse (2) coaxialement.

14. Utilisation selon l'une quelconque des revendications 10 à 13, **caractérisée en ce que** la buse extérieure (3) est conçue en tant que fente annulaire dans laquelle est disposée une pluralité de buses individuelles (14) réparties autour de la circonférence extérieure de la buse de gaz protecteur (2).
